# EUROPEAN PATENT APPLICATION

(11) **EP 4 753 064 A2**
(43) Date of publication of application: **03.06.2026**
(21) Application number: 25219390.9
(22) Date of filing: 28.11.2025
(51) Int. Cl.: H01M 50/533, H01M 50/15, H01M 50/176, H01M 50/342, H01M 50/471, H01M 50/474, H01M 50/103

(54) **ENERGY-STORAGE APPARATUS AND ELECTRICITY-CONSUMPTION DEVICE**

(30) Priority: 29.11.2024 CN 202411731516
(71) Applicant: Hithium Tech HK Limited, Hong Kong (HK)
(72) Inventor: LI, Wenbo, Shenzhen, Guangdong 518110 (CN); ZHANG, Jinwei, Shenzhen, Guangdong 518110 (CN); LIU, Junjun, Shenzhen, Guangdong 518110 (CN)
(74) Representative: Viering, Jentschura & Partner mbB Patent- und Rechtsanwälte

(57) **Abstract**

An energy-storage apparatus (1000) and an electricity-consumption device are provided. The energy-storage apparatus (1000) includes a housing (200), an electrode assembly (300), and an end cover assembly (100). The housing (200) has an opening. The electrode assembly (300) includes an electrode-assembly body (310) and a tab, the electrode-assembly body (310) has a side surface and a top surface (313) connected to the side surface, and the tab extends from the side surface and is connected to the electrode-assembly body (310). The end cover assembly (100) includes a lower plastic member and a terminal post. The lower plastic member includes a main body and a limiting protrusion, the main body has a top face and a bottom face opposite to the top face. The lower plastic member further defines a mounting recess recessed from the bottom face and located on an end portion of the lower plastic member in a length direction of the lower plastic member.

## Description

### TECHNICAL FIELD

The disclosure relates to the field of energy-storage technology, and in particular, to an energy-storage apparatus and an electricity-consumption device.

### BACKGROUND

With the continuous advancement of energy-storage technology, requirements for the interior structure of energy-storage apparatuses are becoming increasingly higher. Existing electrode assemblies are typically of laminated structures or wound structures. In the case where an electrode assembly is of a laminated structure, a positive tab and a negative tab of the electrode assembly typically extend from the same side or respectively extend from two opposite sides of the laminated electrode assembly, and a positive connector and a negative connector of an end cover assembly need to be welded to the positive tab and the negative tab, respectively. However, in the existing end cover assemblies, the structure of lower plastic members is not convenient for installation with the positive connector and the negative connector.

### SUMMARY

An energy-storage apparatus and an electricity-consumption device are provided in the disclosure, which can facilitate the mounting between a lower plastic member and a connector in the case where an electrode assembly is of a laminated structure and a tab of the electrode assembly extends from a side surface of the electrode assembly.

An energy-storage apparatus is provided in the disclosure. The energy-storage apparatus includes a housing, an electrode assembly, and an end cover assembly. The housing has an opening. The electrode assembly includes an electrode-assembly body and a tab, the electrode-assembly body has a side surface and a top surface connected to the side surface, and the tab extends from the side surface and is connected to the electrode-assembly body. The end cover assembly includes a lower plastic member and a terminal post. The lower plastic member includes a main body and a limiting protrusion, the main body has a top face and a bottom face, and the top face and the bottom face are disposed opposite to each other in a thickness direction of the main body. The lower plastic member further defines a mounting recess. The mounting recess is recessed from the bottom face and located on an end portion of the lower plastic member in a length direction of the lower plastic member, and the limiting protrusion is disposed adjacent to the mounting recess in the length direction of the lower plastic member. The end cover assembly further includes a connector. The connector includes a connection portion and a transition portion. The transition portion is connected to the connection portion at an angle, the connection portion is accommodated in the mounting recess, and the transition portion extends away from the bottom face. The electrode assembly is mounted in the housing. The end cover assembly seals the opening. The limiting protrusion abuts against the top surface of the electrode assembly facing the opening. The transition portion is stacked on the side surface and is stacked on and connected to the tab, the terminal post extends through the main body and the connection portion, and the terminal post is electrically connected with the connection portion. The connection portion is spaced apart from the top surface of the electrode assembly.

In may be understood that, in related art, electrode assemblies are typically of laminated structures or wound structures. In the case where an electrode assembly is of a laminated structure, a positive tab and a negative tab of the electrode assembly typically extend from a same side or respectively extend from two opposite sides of the laminated electrode assembly, and a positive connector and a negative connector in an end cover assembly need to be welded to the positive tab and the negative tab respectively. However, in the existing end cover assemblies, the structure of lower plastic members is not convenient for installation with the positive connector and the negative connector.

In embodiments of the disclosure, in the case where the electrode assembly is of a laminated structure, the tab extends from the side surface of the electrode-assembly body. The connector includes the connection portion and the transition portion connected at an angle. The connection portion is located in the mounting recess recessed from the lower plastic member, so that the connector is limited and fixed to the lower plastic member. The terminal post extends through the lower plastic member and the connection portion and is electrically connected to the connection portion, and the transition portion is stacked on and connected to the tab, so as to achieve current conduction between the electrode-assembly body and the terminal post. The limiting protrusion of the lower plastic member is disposed adjacent to the mounting recess and is configured to abut against the top surface of the electrode assembly, avoiding misalignment or displacement of multiple positive electrode sheets and negative electrode sheets constituting the electrode assembly. This not only fixes and limits the position of the entire electrode assembly, but also separates the connection portion of the connector from the electrode-assembly body to prevent short circuits between the electrode assembly and the connector, facilitating the assembly of the connector and the lower plastic member of the end cover assembly, and thus ensuring the safety of the energy-storage apparatus.

In an embodiment, the lower plastic member further includes two ribs. The two ribs both protrude from the bottom face, and the two ribs are respectively located on opposite edges of the bottom face in a width direction of the bottom face. The energy-storage apparatus further includes a protective film. The protective film is located between the housing and the electrode assembly and wraps a bottom portion and a peripheral side of the electrode assembly. The protective film defines an assembly opening, the top surface is located at the assembly opening, and the assembly opening faces the bottom face. A passage is defined between each of two end surfaces of the limiting protrusion in a width direction of the lower plastic member and a corresponding one of the two ribs.

It may be understood that, the assembly opening of the protective film faces the lower plastic member, and the two ribs of the lower plastic member extend towards the assembly opening of the protective film. The protective film at the edge of the assembly opening is connected and fixed to the two ribs of the lower plastic member by a thermal melting process, so as to ensure the insulation between the electrode assembly and the housing with aids of the protective film. The passages defined between the two end surfaces of the limiting protrusion in the width direction of the lower plastic member and the two ribs are configured to allow gas inside the energy-storage apparatus to pass through, ensuring that the internal gas can pass through the passages and be discharged from the energy-storage apparatus in a timely manner under thermal runaway of the energy-storage apparatus. In this way, the circulation of gas inside the energy-storage apparatus can be accelerated, thereby preventing gas from accumulating inside the energy-storage apparatus and ensuring its timely discharge, and thus improving the safety and reliability of the energy-storage apparatus.

In an embodiment, a height of the limiting protrusion protruding from the bottom face is greater than or equal to 2mm and less than or equal to 4mm.

It may be understood that, compared to the main body, the limiting protrusion is set lower toward the electrode assembly by a dimension greater than or equal to 2mm and less than or equal to 4mm, so that a surface of the limiting protrusion facing away from the main body abuts against the top surface of the electrode assembly.

In an embodiment, the mounting recess has a recess-bottom-wall and a recess-side-wall connected to the recess-bottom-wall. In the length direction of the lower plastic member, a gap is defined between a surface of the transition portion facing away from the connection portion and a part of the recess-side-wall of the mounting recess opposite to the limiting protrusion.

It may be understood that, the connection portion of the connector is accommodated in the mounting recess, while the transition portion of the connector extends out of the mounting recess and is disposed opposite to and spaced apart from the recess-side-wall of the mounting recess, defining a gap therebetween. Specifically, the mounting recess and the limiting protrusion are disposed adjacent to each other in the length direction of the lower plastic member. The recess-side-wall of the mounting recess is at least partially opposite to the limiting protrusion. The gap is defined between the surface of the transition portion facing away from the connection portion and the part of the recess-side-wall of the mounting recess opposite to the limiting protrusion. The function of the gap is to reserve sufficient space for welding the connector and the tab, and to accommodate pre-welding between the tab with different thickness and the transition portion.

In an embodiment, a width of the gap is greater than or equal to 0.2mm and less than or equal to 3mm.

It may be understood that, in some embodiments, the width of the gap defined between the surface of the transition portion facing away from the connection portion and the part of the recess-side-wall of the mounting recess opposite to the limiting protrusion is set to be greater than or equal to 0.2mm and less than or equal to 3mm, so as to ensure good welding between the tab and the connector.

In an embodiment, the lower plastic member further includes an extension section. The extension section protrudes from an end surface of the recess-side-wall facing away from the recess-bottom-wall. The extension section is spaced apart from and opposite to the limiting protrusion in a length direction of the main body, and the extension section is located on an end portion of the main body in the length direction of the main body. The protective film at a peripheral edge of the assembly opening is connected to the extension section by a thermal melting process.

It may be understood that, the extension section is disposed on a side of the mounting recess away from the limiting protrusion. Specifically, the extension section protrudes from the part of the recess-side-wall of the mounting recess opposite to the limiting protrusion, and protrudes from an end surface of this part of the recess-side-wall facing away from the recess-bottom-wall. The extension section is configured to be connected to the edge of the assembly opening of the protective film together with the two ribs by a thermal melting process, so that the protective film is fixed to the lower plastic member, thereby ensuring the insulation of the electrode assembly with aid of the protective film and ensuring the safety of the energy-storage apparatus.

In an embodiment, the lower plastic member further includes two positioning posts. The two positioning posts protrude from the recess-bottom-wall, and the two positioning posts are staggered in the length direction and the width direction of the lower plastic member. The connection portion defines two limiting holes. The two limiting holes penetrate through two surfaces of the connection portion in a thickness direction of the connection portion, and each of the two positioning posts extends through a corresponding one of the two limiting holes.

It may be understood that, the two positioning posts of the lower plastic member are located in the mounting recess. The connection portion of the connector is accommodated in the mounting recess, and the positioning post extends through the limiting hole of the connection portion, thereby facilitating the assembly and positioning of the connector and the lower plastic member.

In an embodiment, the end cover assembly further includes an end cover. The end cover and the lower plastic member are stacked in a thickness direction of the end cover assembly, and the end cover is located on a side of the lower plastic member facing away from the electrode assembly. The lower plastic member further includes a boss. The boss protrudes from the bottom face. The mounting recess is recessed from the boss. The boss is spaced apart from each of the two ribs to define a flow channel in the width direction of the lower plastic member, and the flow channel is in communication with the passage. The lower plastic member further includes an explosion-proof grid. The explosion-proof grid defines multiple vent holes. The multiple vent holes penetrate through the top face and the bottom face, and the multiple vent holes are in communication with the flow channel.

It may be understood that, the flow channel defined between the boss and each of the two ribs is in communication with the passage defined between the limiting protrusion and each of the two ribs, and the passage is in communication with the vent holes of the explosion-proof grid of the lower plastic member, thus the flow channel is in communication with the vent holes. Gas inside the energy-storage apparatus can sequentially enter the flow channel, the passage, and the vent holes of the explosion-proof grid from the bottom and the sides of the electrode assembly, and can be discharged from the explosion-proof hole of the end cover, ensuring that the internal gas can be discharged from the energy-storage apparatus in a timely manner under thermal runaway of the energy-storage apparatus, thereby accelerating the circulation of gas inside the energy-storage apparatus, preventing gas from accumulating inside the energy-storage apparatus and ensuring its timely discharge, and improving the safety and reliability of the energy-storage apparatus.

In an embodiment, the side surface includes a first side surface and a second side surface. The first side surface and the second side surface are disposed opposite to each other in a width direction of the electrode-assembly body. The tab includes a first tab and a second tab, the first tab extends from the first side surface, and the second tab extends from the second side surface. The connector includes a first connector and a second connector. The first connector includes a first connection portion and a first transition portion. The first transition portion has a first outer-side-surface. The second connector includes a second connection portion and a second transition portion. The second transition portion has a second outer-side-surface. The first outer-side-surface and the second outer-side-surface both face away from the electrode-assembly body. The first outer-side-surface is connected to the first tab, and the second outer-side-surface is connected to the second tab. The mounting recess includes a first mounting recess and a second mounting recess. The first connection portion is accommodated in the first mounting recess. The first mounting recess has a first recess-side-wall, and a first gap is defined between the first outer-side-surface and the first recess-side-wall. The second mounting recess has a second recess-side-wall, and a second gap is defined between the second outer-side-surface and the second recess-side-wall. A width of the first gap is greater than or equal to 0.8mm and less than or equal to 3mm, and a width of the second gap is greater than or equal to 0.2mm and less than or equal to 2.5mm.

It may be understood that, the electrode assembly has the first tab and the second tab extending from two opposite side surfaces in a width direction of the electrode assembly. The first tab is connected to the first transition portion of the first connector, and the second tab is connected to the second transition portion of the second connector. The first transition portion has a first outer-side-surface facing away from the electrode assembly. The first recess-side-wall of the first mounting recess is opposite to the limiting protrusion. The gap between the first outer-side-surface and the first recess-side-wall of the first mounting recess is the first gap. The second transition portion has a second outer-side-surface facing away from the electrode assembly. The second recess-side-wall of the second mounting recess is opposite to the limiting protrusion. The gap between the second outer-side-surface and the second recess-side-wall of the second mounting recess is the second gap. Due to the difference between the sizes of the first connector and the second connector, the width of the first gap is different from the width of the second gap.

In an embodiment, the first mounting recess further has a first recess-bottom-wall, and the second mounting recess further has a second recess-bottom-wall. The lower plastic member further includes two first positioning posts and two second positioning posts. The two first positioning posts both protrude from the first recess-bottom-wall and are staggered in the length direction and the width direction of the lower plastic member. The two second positioning posts both protrude from the second recess-bottom-wall and are symmetrically disposed in the length direction and the width direction of the lower plastic member. The first connection portion defines two first limiting holes. The two first limiting holes both penetrate through two surfaces of the first connection portion in a thickness direction of the first connection portion, and each of the two first positioning posts extends through a corresponding one of the two first limiting holes. The second connection portion defines two second limiting holes, the two second limiting holes both penetrate through two surfaces of the second connection portion in a thickness direction of the second connection portion, and each of the two second positioning posts extends through a corresponding one of the two second limiting holes.

It may be understood that, the first positioning post is located in the first mounting recess, and the first connection portion of the first connector is accommodated in the first mounting recess. The first connector defines the first limiting hole, and the first positioning post extends through the first limiting hole to limit and fix the first connector to the lower plastic member. The second positioning post is located in the second mounting recess, and the second connection portion of the second connector is accommodated in the second mounting recess. The second connector defines the second limiting hole, and the second positioning post extends through the second limiting hole to limit and fix the second connector to the lower plastic member. Therefore, the first positioning post and the second positioning post provide positioning references for the assembly of the first connector and the second connector with the lower plastic member, respectively. Since the materials of the first connector and the second connector are different, to prevent incorrect mounting of the first connector and the second connector, the two first positioning posts are staggered relative to a central axis in the length direction and the width direction of the lower plastic member, and the two second positioning posts are symmetrically disposed relative to the central axis in the length direction and the width direction of the lower plastic member. This design ensures that, the first connector will not be mistakenly mounted in the second mounting recess and the second connector will not be mistakenly mounted in the first mounting recess during the assembly of the first connector and the second connector with the lower plastic member, thereby providing a mistake-proofing effect during the assembly of the first connector and the second connector.

An electricity-consumption device is provided in the disclosure. The electricity-consumption device includes the energy-storage apparatus. The energy-storage apparatus is configured to supply power to the electricity-consumption device.

### BRIEF DESCRIPTION OF THE DRAWINGS

FIG. 1 is a diagram illustrating an application scenario of an energy-storage apparatus provided in embodiments of the disclosure.
FIG. 2 is a schematic structural view of an energy-storage apparatus provided in embodiments of the disclosure.
FIG. 3 is an exploded schematic structural view of the energy-storage apparatus illustrated in FIG. 2.
FIG. 4 is a schematic structural view of part of the energy-storage apparatus illustrated in FIG. 2.
FIG. 5 is a schematic structural view of a first lower plastic member of an end cover assembly in the energy-storage apparatus illustrated in FIG. 3.
FIG. 6 is a schematic structural view of the first lower plastic member illustrated in FIG. 5, viewed from another direction.
FIG. 7 is a schematic structural view of a second lower plastic member of the end cover assembly in the energy-storage apparatus illustrated in FIG. 3.
FIG. 8 is a schematic structural view of the second lower plastic member illustrated in FIG. 7, viewed from another direction.
FIG. 9 is a schematic structural view of an end cover of the end cover assembly in the energy-storage apparatus illustrated in FIG. 3, viewed from another direction.
FIG. 10 is a schematic structural view of a first connector and a second connector of the end cover assembly in the energy-storage apparatus illustrated in FIG. 3.
FIG. 11 is a schematic structural view of part of the energy-storage apparatus illustrated in FIG. 3.
FIG. 12 is a schematic cross-sectional structural view of part of the energy-storage apparatus illustrated in FIG. 2.
FIG. 13 is an enlarged view of section Q of the energy-storage apparatus illustrated in FIG. 12.
FIG. 14 is an enlarged view of section W of the energy-storage apparatus illustrated in FIG. 12.

Corresponding names for reference signs in the accompanying drawings are as follows:
energy-storage apparatus 1000, housing 200, opening 201, accommodating cavity 202, end cover assembly 100, end cover 30, upper surface 31, lower surface 32, first through hole 33, second through hole 34, assembly recess 35, explosion-proof hole 36, first limiting recess 37, second limiting recess 38, first terminal post 40, second terminal post 50, first connector 60, first connection portion 61, first penetrating hole 611, first limiting hole 612, first transition portion 62, first outer-side-surface 621, first inner-side-surface 622, second connector 70, second connection portion 71, second penetrating hole 711, second limiting hole 712, second transition portion 72, second outer-side-surface 721, second inner-side-surface 722, explosion-proof sheet 80, first lower plastic member 10, first main body 11, first top face 111, first bottom face 112, first limiting post 113, first recess 12, first protruding portion 13, first face 131, first rib 141, second rib 142, first boss 15, first limiting protrusion 16, first protruding surface 161, first mounting recess 17, first recess-bottom-wall 171, first recess-side-wall 172, third recess-side-wall 173, first terminal-post through hole 18, first positioning post 19, first extension section *a,* first flow channel *F*, first passage *M,* explosion-proof grid 101, vent hole 102, second lower plastic member 20, second main body 21, second top face 211, second bottom face 212, second recess 22, second protruding portion 23, second face 231, third rib 241, fourth rib 242, second boss 25, second limiting protrusion 26, second protruding surface 261, second mounting recess 27, second recess-bottom-wall 271, second recess-side-wall 272, fourth recess-side-wall 273, second terminal-post through hole 28, second positioning post 29, second limiting post 213, second extension section *b,* second flow channel *G*, second passage *N,* electrode assembly 300, electrode-assembly body 310, first side surface 311, second side surface 312, top surface 313, bottom surface 314, first tab 320, second tab 330, protective film 400, assembly opening 401, first gap *H*1, second gap *H*2, first electricity-consumption device 3000, second electricity-consumption device 2000, first electrical-energy conversion apparatus 4100, second electrical-energy conversion apparatus 4200, energy-storage system 5000.

### DETAILED DESCRIPTION

The following will clearly and comprehensively illustrate technical solutions of embodiments of the disclosure with reference to the accompanying drawings of embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

In the disclosure, unless otherwise expressly specified and defined, terms such as "mount", "link", "connect", "fix" need to be interpreted broadly. For example, it may be a fixed connection, a detachable connection, or an integral connection; it may be a mechanical connection, an electrical connection, or communication with each other; it may be a direct connection, an indirect connection through an intermediary, the internal connection between two elements, or the interaction relationship between two elements, unless otherwise expressly and specifically defined. Furthermore, certain tolerances may be allowed when using terms such as "same", "equal", or "parallel" herein.

It may be noted that, terms such as "first" and "second" are used for descriptive purposes only and cannot be understood as indicating or implying relative importance or implicitly indicating the number (quantity) of the indicated technical features. Thus, features defined with "first", "second", and the like may explicitly or implicitly include at least one of the features.

Due to that people's demand for energy is strongly correlated with time and space, in order to rationally utilize energy and improve the utilization rate of energy, it may need to store a type of energy via a medium or a device, or it may need to convert a type of energy into another type of energy and then store the other type of energy via a medium or a device. Stored energy may be released in a specific energy form based on future application needs. It is known that green energy sources such as photovoltaics and wind power are mainly used to generate green electricity to replace fossil fuels. At present, the generation of green electricity generally depends on photovoltaics, wind power, water potential, etc. Wind energy and solar energy generally have features such as high intermittence and significant fluctuations, and thus the power grid may not be stable, resulting in insufficient electricity during peak periods and excess electricity during off-peak periods. Unstable voltage may also cause damage to electricity. Therefore, issues like "curtailment of wind power and solar power" may arise due to insufficient electricity demand or insufficient grid integration capacity. To solve these problems, energy storage may be needed which involves converting electric energy into other type of energy by physical or chemical means and then storing the other type of energy. Stored energy may be converted into electric energy and released when needed. Simply, "energy storage" is similar to a large-scale "power bank", which refers to that electric energy is stored in the case of sufficient solar energy and wind energy, and the stored electric energy is released when needed.

Taking electrochemical energy storage as an example, an energy-storage apparatus 1000 is provided in the disclosure. The energy-storage apparatus 1000 includes chemical cells. Chemical elements in the chemical cell mainly serve as an energy storage medium, and the charging and discharging process is accompanied by chemical reaction or change of the energy storage medium, simply, the charging and discharging process involves storing in the chemical cells the electric energy generated by wind energy and solar energy, and releasing the stored electric energy for use during peak periods of electricity usage or transferring the stored electric energy to areas where electricity is in short supply.

At present, energy storage (i.e., storing energy) may be applied in various application scenarios, including generation-side energy storage, grid-side energy storage, renewable-energy grid-connected energy storage, user-side energy storage, etc. Corresponding types of energy-storage apparatuses 1000 include the following.

(1) A large-scale energy-storage container applied in energy storage scenarios at the grid side is included, where the energy storage container may serve as a high-quality active and reactive regulation power source in the grid, which can realize matching of electric energy with loads in time and space, enhance the capacity for integration of renewable energy, and is of great significance in the backup of the grid system, relieving the pressure of peak power supply, and peak shaving and frequency modulation.

(2) A small and medium-sized energy-storage cabinet applied in industrial and commercial energy storage scenarios at the user side (banks, shopping malls, etc.) and a small-sized household energy storage box applied in household energy storage scenarios at the user side are included, which mainly operate in a "peak shaving and valley filling" mode. Based on the demand for electricity, there may be a significant price difference in electricity prices at peak and off-peak periods. To reduce costs, an energy storage device of a user such as an energy storage cabinet/box may be charged during off-peak periods, and the electricity in the energy storage device may be released for use during the peak periods to save electricity costs.

It may be noted that, devices including the energy-storage apparatus 1000 such as the above energy-storage container, the small and medium-sized energy-storage cabinet, and a household small-sized energy-storage box may be understood as electricity-consumption devices.

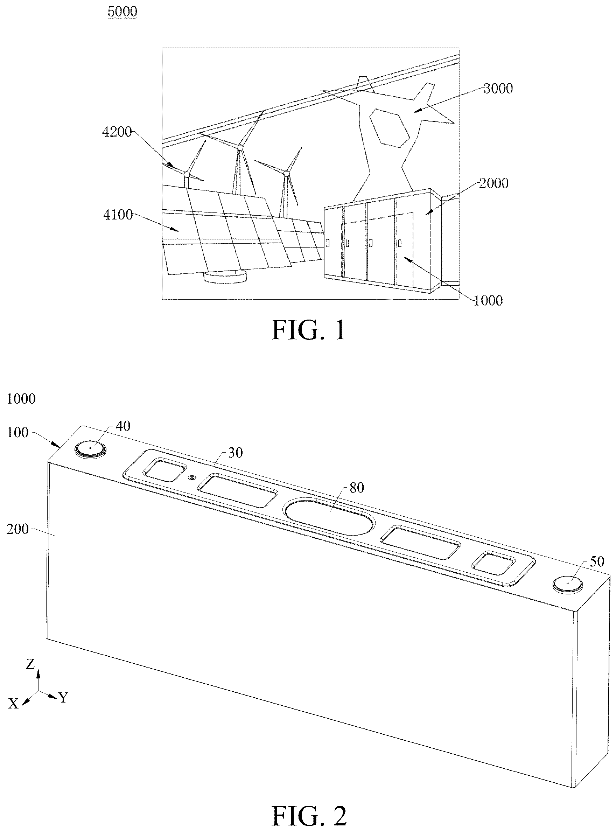

Reference is made to FIG. 1, which is a diagram illustrating an application scenario of an energy-storage apparatus provided in embodiments of the disclosure.

The energy-storage apparatus 1000 provided in embodiments of the disclosure is applied to an energy-storage system 5000. The energy-storage system 5000 includes a first electrical-energy conversion apparatus 4100 (photovoltaic panel), a second electrical-energy conversion apparatus 4200 (wind turbine), a first electricity-consumption device 3000 (power grid), a second electricity-consumption device 2000 (base station), and the energy-storage apparatus 1000. The energy-storage system 5000 further includes an energy-storage cabinet. The energy-storage apparatus 1000 is mounted in the energy-storage cabinet, and the energy-storage cabinet can be mounted outdoors. Specifically, the first electrical-energy conversion apparatus 4100 can convert solar energy into electrical energy during electricity-price valley periods. The energy-storage apparatus 1000 is configured to store the electrical energy and supply it to the first electricity-consumption device 3000 or the second electricity-consumption device 2000 during electricity-price peak period, or to supply power when the first electricity-consumption device 3000 or the second electricity-consumption device 2000 is in a power outage/failure. The second electrical-energy conversion apparatus 4200 can convert wind energy into electrical energy. The energy-storage apparatus 1000 is configured to store the electrical energy and supply it to the first electricity-consumption device 3000 or the second electricity-consumption device 2000 during electricity-price peak periods, or to supply power when the first electricity-consumption device 3000 or the second electricity-consumption device 2000 is in a power outage/failure. The transmission of the electrical energy can be carried out by high-voltage cables.

It may be noted that, devices including the energy-storage apparatus 1000, such as the aforementioned first electricity-consumption device 3000 and second electricity-consumption device 2000, may be understood as electricity-consumption devices. The energy-storage apparatus 1000 is configured to supply power to the electricity-consumption device.

There may be multiple energy-storage apparatuses 1000, and the multiple energy-storage apparatuses 1000 are connected in series or in parallel with one another. In the embodiment, "multiple" refers to two or more.

It may be understood that, the energy-storage apparatus 1000 may include, but is not limited to, a single battery cell, a battery module, a battery pack, a battery system, etc. The actual application form of the energy-storage apparatus 1000 provided in embodiments of the disclosure may be, but is not limited to, the listed products, and may be other application forms. For example, the energy-storage apparatus 1000 may be a secondary cell such as a nickel-metal hydride cell, nickel-cadmium cell, lead-acid (or lead storage) cell, lithium-ion cell, polymer lithium-ion cell, etc. In the case where the energy-storage apparatus 1000 is a single battery cell, it may be a cylindrical cell, a prismatic cell, or a cell of other shapes. In the embodiment, the energy-storage apparatus 1000 is a prismatic cell. The prismatic cell is a secondary cell.

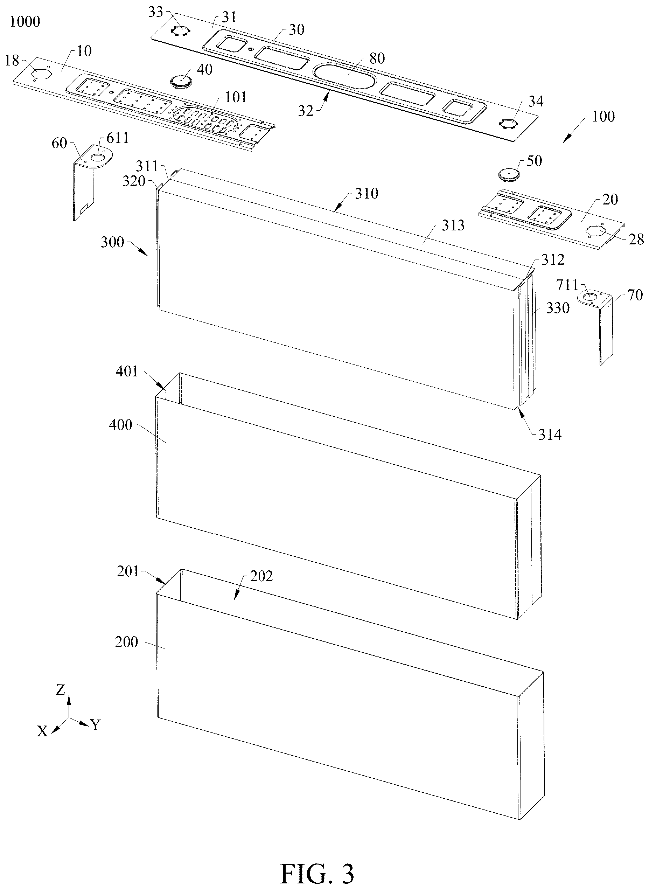

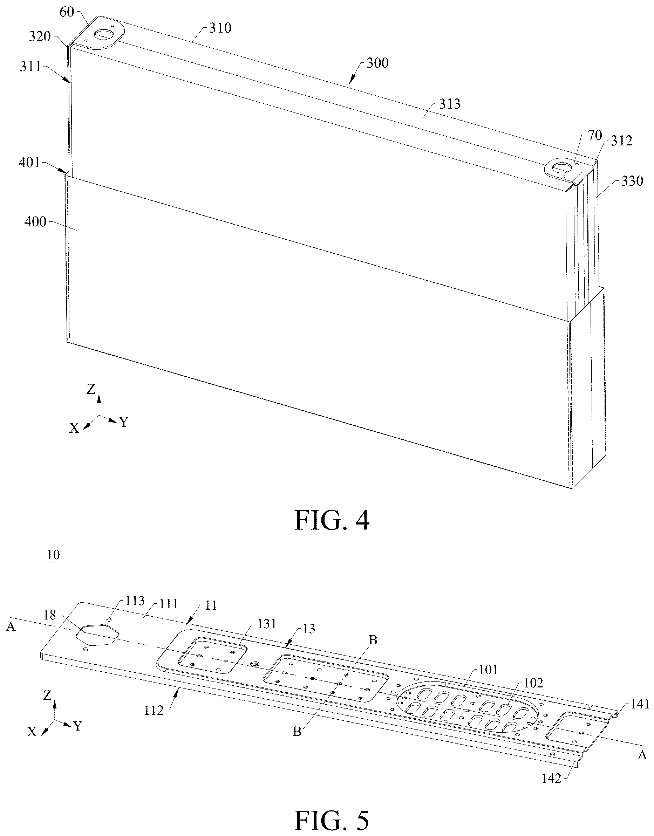

Reference is made to FIG. 2, FIG. 3, and FIG. 4 together. FIG. 2 is a schematic structural view of an energy-storage apparatus provided in embodiments of the disclosure, FIG. 3 is an exploded schematic structural view of the energy-storage apparatus illustrated in FIG. 2, and FIG. 4 is a schematic structural view of part of the energy-storage apparatus illustrated in FIG. 2. It may be noted that, FIG. 4 only schematically illustrates the structure of assembly of a protective film, an electrode assembly, a first connector, and a second connector, and does not refer to the assembly sequence.

For ease of illustration, a width direction of the energy-storage apparatus 1000 is defined as the *X*-axis direction, a length direction of the energy-storage apparatus 1000 is defined as the *Y-*axis direction, and a height direction of the energy-storage apparatus 1000 is defined as the *Z*-axis direction. The *X*-axis direction, *Y*-axis direction, and *Z*-axis direction are perpendicular to each other.

The directional terms such as "upper", "top", "lower", "bottom", "left", and "right" mentioned in embodiments of the disclosure are described based on the orientation shown in FIG. 2, and do not construct a limitation on the energy-storage apparatus 1000 in actual application scenarios. Specifically, a part of the energy-storage apparatus 1000 facing the positive direction of the *Z*-axis direction is defined as the top of the energy-storage apparatus 1000, and a part of the energy-storage apparatus 1000 facing the negative direction of the *Z*-axis direction is defined as the bottom of the energy-storage apparatus 1000.

As illustrated in FIG. 2 and FIG. 3, the energy-storage apparatus 1000 includes a housing 200, an end cover assembly 100, an electrode assembly 300, and a protective film 400. The housing 200 defines an opening 201 and an accommodating cavity 202. The opening 201 is in communication with the accommodating cavity 202. The electrode assembly 300 and the protective film 400 are both accommodated in the accommodating cavity 202. The protective film 400 is disposed between the electrode assembly 300 and the housing 200. The protective film 400 wraps around the peripheral side and the bottom of the electrode assembly 300. The protective film 400 is configured to protect the electrode assembly 300 and insulate the electrode assembly 300 from the housing 200 to prevent short circuits between the electrode assembly 300 and the housing 200. The end cover assembly 100 is mounted on an end of the electrode assembly 300 and seals the opening 201 to isolate the internal environment of the energy-storage apparatus 1000 from the external environment. An edge of a side of the end cover assembly 100 facing the electrode assembly 300 is connected to the protective film 400.

In the embodiment, the electrode assembly 300 is of a laminated structure. The electrode assembly 300 includes an electrode-assembly body 310 and a tab. The electrode-assembly body 310 is formed by stacking together a positive electrode sheet, a negative electrode sheet, and an insulating film between the positive electrode sheet and the negative electrode sheet. The positive electrode sheet and the negative electrode sheet both include a first portion coated with an active material and a second portion that extends outward from the first portion and is not coated with an active material. The electrode-assembly body 310 has a first side surface 311 and a second side surface 312. In a length direction of the electrode-assembly body 310 (i.e., the *Y*-axis direction), the first side surface 311 and the second side surface 312 are opposite to each other. The electrode-assembly body 310 further has a top surface 313 and a bottom surface 314. In a height direction of the electrode-assembly body 310 (i.e., the *Z*-axis direction), the top surface 313 and the bottom surface 314 are opposite to each other. The top surface 313 and the bottom surface 314 are connected between the first side surface 311 and the second side surface 312. In the embodiment, the number of electrode-assembly bodies 310 is two. The two electrode-assembly bodies 310 are connected in parallel in the *Y*-axis direction.

The tab includes a first tab 320 and a second tab 330. The first tab 320 and the second tab 330 are both electrically connected to the electrode-assembly body 310. In the *Y*-axis direction, the first tab 320 extends from the first side surface 311 of the electrode-assembly body 310. The second tab 330 extends from the second side surface 312 of the electrode-assembly body 310. In the embodiment, the first tab 320 may be a positive tab, and the second tab 330 may be a negative tab. The positive tab corresponds to the second portion of the positive electrode sheet that is not coated with the active material. The negative tab corresponds to the second portion of the negative electrode sheet that is not coated with the active material. There are two first tabs 320 and two second tabs 330. In other embodiments, the first tab 320 may be a negative tab, and the second tab 330 may be a positive tab.

In the embodiment, the protective film 400 is a Mylar film. In some embodiments, the protective film 400 may be made of insulating materials, such as polyethylene (PE), polypropylene (PP), and polyester. The protective film 400 wraps around the first side surface 311, the second side surface 312, the bottom surface 314, and two surfaces of the electrode-assembly body 310 in a thickness direction of the electrode-assembly body 310.

The end cover assembly 100 includes an end cover 30, a lower plastic member, a first terminal post 40, a second terminal post 50, a first connector 60, and a second connector 70. The lower plastic member and the end cover 30 are stacked in the *Z*-axis direction. The length of the lower plastic member is substantially the same as the length of the end cover 30. The width of the lower plastic member is substantially the same as the width of the end cover 30. The first terminal post 40 and the second terminal post 50 are respectively located on two opposite ends of the end cover assembly 100 in a length direction of the end cover assembly 100. The first terminal post 40 extends through both the end cover 30 and the lower plastic member and is connected to the first connector 60. The second terminal post 50 extends through both the end cover 30 and the lower plastic member and is connected to the second connector 70. As illustrated in FIG. 2 and FIG. 3, the first connector 60 and the second connector 70 are respectively located on two opposite ends of the electrode assembly 300 in a length direction of the electrode assembly 300 (i.e., the *Y*-axis direction). A part of the first connector 60 is mounted on a side of the lower plastic member facing away from the end cover 30, and another part of the first connector 60 is stacked on and connected to the first tab 320. The first tab 320 is electrically connected to the first terminal post 40 through the first connector 60. A part of the second connector 70 is mounted on the side of the lower plastic member facing away from the end cover 30, and another part of the second connector 70 is stacked on and connected to the second tab 330. The second tab 330 is electrically connected to the second terminal post 50 through the second connector 70. The end cover assembly 100 further includes an explosion-proof valve. The explosion-proof valve includes an explosion-proof sheet 80 and an explosion-proof grid 101. The explosion-proof sheet 80 is mounted on the end cover 30, and the explosion-proof grid 101 is mounted on the lower plastic member. The explosion-proof valve is configured for explosion-proof and pressure relief of the energy-storage apparatus 1000. In the embodiment, the end cover 30 is a smooth aluminum member, and the lower plastic member is made of plastic material and is insulating. The first terminal post 40 is a positive terminal post, and the second terminal post 50 is a negative terminal post. In other embodiments, the first terminal post 40 is a negative terminal post, and the second terminal post 50 is a positive terminal post.

The lower plastic member includes a first lower plastic member 10 and a second lower plastic member 20. In the embodiment, the first lower plastic member 10 and the second lower plastic member 20 are separated from each other. In other embodiments, the first lower plastic member 10 may be integrated with the second lower plastic member 20.

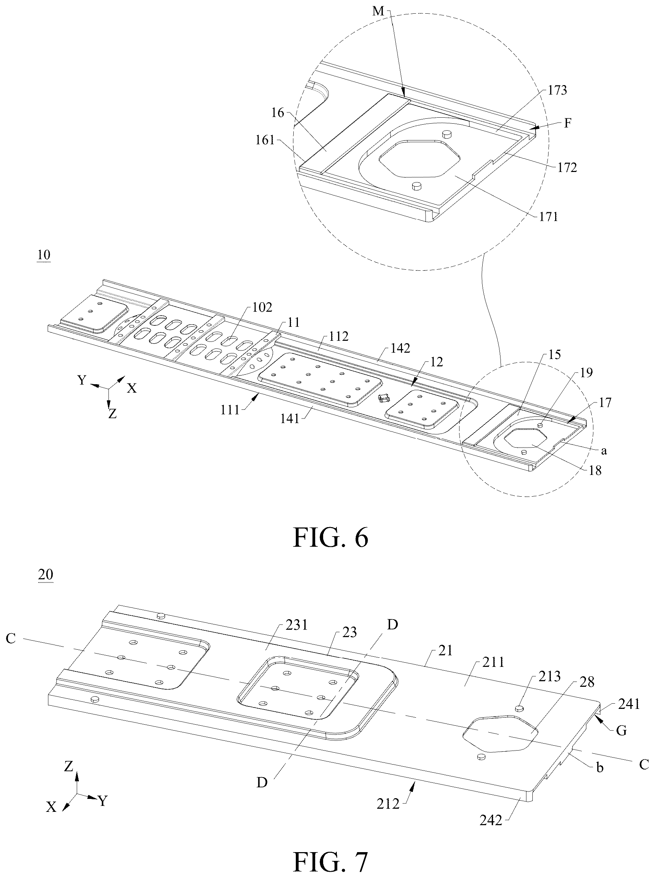

Reference is made to FIG. 5 and FIG. 6 together. FIG. 5 is a schematic structural view of a first lower plastic member of an end cover assembly in the energy-storage apparatus illustrated in FIG. 3, and FIG. 6 is a schematic structural view of the first lower plastic member illustrated in FIG. 5, viewed from another direction.

In the embodiment, the first lower plastic member 10 is an elongated thin plate. The first lower plastic member 10 includes a first main body 11. The first main body 11 has a first top face 111 and a first bottom face 112. The first top face 111 and the first bottom face 112 are opposite to each other in a thickness direction of the first main body 11 (i.e., the *Z*-axis direction).

The first lower plastic member 10 further defines a first recess 12. The first recess 12 is recessed from the first bottom face 112 of the first main body 11. In a thickness direction of the first lower plastic member 10 (i.e., the *Z*-axis direction), the first recess 12 is recessed from the first bottom face 112 towards the first top face 111, and a first protruding portion 13 protrudes from the first top face 111. It may be understood that, the first lower plastic member 10 includes the first protruding portion 13. In the *Z*-axis direction, the first protruding portion 13 protrudes from the first top face 111 of the first main body 11. The orthographic projection of the first protruding portion 13 on the first bottom face 112 completely covers the first recess 12. The first protruding portion 13 is configured to limit and fix the end cover 30. The first protruding portion 13 has a first face 131. In the thickness direction of the first lower plastic member 10, the first face 131 is disposed facing away from a recess-bottom-wall of the first recess 12. In the embodiment, the first recess 12 is an elongated recess. The first protruding portion 13 is an elongated protrusion. The length of the first recess 12 and the length of the first protruding portion 13 are both less than the length of the first lower plastic member 10. The width of the first recess 12 and the width of the first protruding portion 13 are both less than the width of the first lower plastic member 10.

The first lower plastic member 10 includes the explosion-proof grid 101. The explosion-proof grid 101 is disposed on the first protruding portion 13. The explosion-proof grid 101 defines multiple vent holes 102 therein. In the thickness direction of the first lower plastic member 10, the multiple vent holes 102 penetrate through the first protruding portion 13. It may be understood that, the multiple vent holes 102 penetrate through both sides of the first lower plastic member 10 in the thickness direction of the first lower plastic member 10. The multiple vent holes 102 are configured to allow gas to pass through. In the embodiment, the multiple vent holes 102 are substantially elliptical holes.

The first lower plastic member 10 further includes a first rib 141 and a second rib 142. The first rib 141 and the second rib 142 both protrude from the first bottom face 112 of the first main body 11. In a width direction of the first lower plastic member 10, the first rib 141 and the second rib 142 are respectively located on two opposite sides of the first main body 11. The first rib 141 and the second rib 142 both extend in a length direction of the first lower plastic member 10. The length of the first rib 141 and the length of the second rib 142 are equal to the length of the first lower plastic member 10 (certain process tolerances are allowed).

The first lower plastic member 10 further includes a first boss 15. The first boss 15 protrudes from the first bottom face 112 of the first main body 11. In the length direction of the first lower plastic member 10 (i.e., the *Y*-axis direction), the first boss 15 is located on an end of the first lower plastic member 10 away from the explosion-proof grid 101. In the width direction of the first lower plastic member 10 (i.e., the *X*-axis direction), two opposite sides of the first boss 15 are opposite to and spaced apart from the first rib 141 and the second rib 142, respectively. A first flow channel *F* is defined between the first boss 15 and each of the first rib 141 and the second rib 142. The first flow channel *F* is configured to allow gas inside the energy-storage apparatus 1000 to pass through. In the embodiment, the first boss 15 is substantially a rectangular protrusion.

The first lower plastic member 10 further includes a first limiting protrusion 16. The first limiting protrusion 16 protrudes from the first bottom face 112. In the *Y*-axis direction, the first boss 15 and the first limiting protrusion 16 are disposed adjacent to each other. The first limiting protrusion 16 extends in the *X*-axis direction. The first limiting protrusion 16 is configured for contact with the electrode assembly 300. The first limiting protrusion 16 has a first protruding surface 161. In the *Z*-axis direction, the first protruding surface 161 faces away from the first bottom face 112. In the embodiment, the first limiting protrusion 16 is substantially a rectangular protrusion. The distance from the first protruding surface 161 to the first bottom face 112 is greater than or equal to 2mm and less than or equal to 4mm. That is, the height by which the first limiting protrusion 16 protrudes from the first bottom face 112 is greater than or equal to 2mm and less than or equal to 4mm. A first passage *M* is defined between each of two end surfaces of the first limiting protrusion 16 in a width direction of the first main body 11 and a corresponding one of the first rib 141 and the second rib 142. The first passage *M* is in communication with the first flow channel *F* and is configured to allow gas inside the energy-storage apparatus 1000 to pass through.

The first lower plastic member 10 further defines a first mounting recess 17. The first mounting recess 17 is recessed from a surface of the first boss 15 facing away from the first main body 11 and is recessed towards the first main body 11. The first mounting recess 17 is configured to accommodate a part of the first connector 60. The first mounting recess 17 has a first recess-bottom-wall 171, a first recess-side-wall 172, and a third recess-side-wall 173. The orientation of the first recess-bottom-wall 171 is the same as the orientation of the first protruding surface 161. The first recess-side-wall 172 is connected to the third recess-side-wall 173, and the first recess-side-wall 172 and the third recess-side-wall 173 both surround and are connected to the first recess-bottom-wall 171. It may be understood that, the first recess-side-wall 172 and the third recess-side-wall 173 together form a recess-peripheral-wall of the first mounting recess 17. The first recess-side-wall 172 is away from the first limiting protrusion 16 and is opposite to the first limiting protrusion 16. The third recess-side-wall 173 is close to the first limiting protrusion 16. In the embodiment, a surface of the first recess-side-wall 172 close to the first recess-bottom-wall 171 is a flat surface, and a surface of the third recess-side-wall 173 close to the first recess-bottom-wall 171 is an arc surface.

It may be understood that, a surface of the first boss 15 close to the first main body 11 may be regarded as the first bottom face 112. Alternatively, the first lower plastic member 10 does not include the first boss 15, and the first mounting recess 17 may be considered as being directly recessed from the first bottom face 112 and recessed towards the first top face 111.

The first lower plastic member 10 further includes a first extension section *a*. In the *Z-*axis direction, the first extension section *a* protrudes from an end surface of the first recess-side-wall 172 facing away from the first recess-bottom-wall 171, and the first extension section *a* extends away from the first lower plastic member 10. The first extension section *a* is spaced apart from and opposite to the first limiting protrusion 16 in a length direction of the first main body 11, and the first extension section *a* is located on an end portion of the first main body 11 in the length direction of the first main body 11. It may be understood that, in the *Y*-axis direction, the first extension section *a* is disposed on an edge of an end portion of the first lower plastic member 10 away from the second lower plastic member 20. The first extension section *a* is connected to the protective film 400 by a thermal melting process.

The first lower plastic member 10 further defines a first terminal-post through hole 18. The first terminal-post through hole 18 is configured to allow the first terminal post 40 to pass through. In the length direction of the first lower plastic member 10, the first terminal-post through hole 18 is spaced apart from the first recess 12. The first terminal-post through hole 18 penetrates through the first top face 111 of the first main body 11 and the first recess-bottom-wall 171 of the first mounting recess 17. In the embodiment, the first terminal-post through hole 18 is substantially a hexagonal hole. In some embodiments, the first terminal-post through hole 18 may be of a circular shape, an elliptical shape, or other shapes, which is not strictly limited in the disclosure.

The first lower plastic member 10 further includes multiple first positioning posts 19. The multiple first positioning posts 19 all protrude from the first recess-bottom-wall 171. The multiple first positioning posts 19 are spaced apart from the periphery of the first terminal-post through hole 18, and the multiple first positioning posts 19 are spaced apart from one another. The multiple first positioning posts 19 are configured to position the first connector 60 during assembly. In the embodiment, the multiple first positioning posts 19 are of cylindrical shapes. The number of the first positioning posts 19 is two. The two first positioning posts 19 are respectively located on two sides of a central axis A-A in the length direction of the first lower plastic member 10, and the line connecting the two first positioning posts 19 intersects with a central axis B-B in the width direction of the first lower plastic member 10. It may be understood that, the two first positioning posts 19 are staggered in the length direction and the width direction of the first lower plastic member 10.

The first lower plastic member 10 further includes multiple first limiting posts 113. The multiple first limiting posts 113 protrude from the first top face 111 of the first main body 11. The multiple first limiting posts 113 are spaced apart from the periphery of the first terminal-post through hole 18, and the multiple first limiting posts 113 are spaced apart from one another. The multiple first limiting posts 113 are configured to position the end cover 30 during assembly. In the embodiment, the first limiting posts 113 are of cylindrical shapes. The number of the first limiting posts 113 is two. The line connecting the two first limiting posts 113 is perpendicular to the central axis A-A in the length direction of the first lower plastic member 10, and the line connecting the two first limiting posts 113 is parallel to the central axis B-B in the width direction of the first lower plastic member 10. It may be understood that, the two first limiting posts 113 are symmetrically disposed with respect to the length direction and the width direction of the first lower plastic member 10.

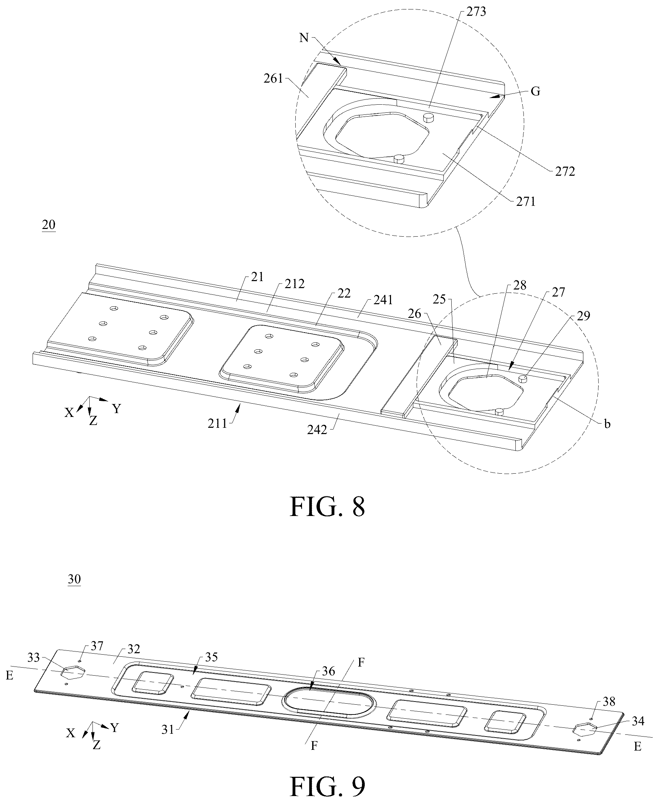

Reference is made to FIG. 7 and FIG. 8 together. FIG. 7 is a schematic structural view of a second lower plastic member of the end cover assembly in the energy-storage apparatus illustrated in FIG. 3, and FIG. 8 is a schematic structural view of the second lower plastic member illustrated in FIG. 7, viewed from another direction.

In the embodiment, the second lower plastic member 20 is an elongated thin plate. The second lower plastic member 20 includes a second main body 21. The second main body 21 has a second top face 211 and a second bottom face 212. The second top face 211 and the second bottom face 212 are opposite to each other in a thickness direction of the second main body 21 (i.e., the *Z-*axis direction).

The second lower plastic member 20 further defines a second recess 22. The second recess 22 is recessed from the second bottom face 212 of the second main body 21. In a thickness direction of the second lower plastic member 20 (i.e., the *Z*-axis direction), the second recess 22 is recessed from the second bottom face 212 towards the second top face 211, and a second protruding portion 23 protrudes from the second top face 211. It may be understood that, the second lower plastic member 20 includes the second protruding portion 23. In the *Z*-axis direction, the second protruding portion 23 protrudes from the second top face 211 of the second main body 21. The orthographic projection of the second protruding portion 23 on the second bottom face 212 completely covers the second recess 22. The second protruding portion 23 is configured to limit and fix the end cover 30. The second protruding portion 23 has a second face 231. In the thickness direction of the second lower plastic member 20, the second face 231 is disposed facing away from a recess-bottom-wall of the second recess 22. In the embodiment, the second recess 22 is an elongated recess. The second protruding portion 23 is an elongated protrusion. The length of the second recess 22 and the length of the second protruding portion 23 are both less than the length of the second lower plastic member 20. The width of the second recess 22 and the width of the second protruding portion 23 are both less than the width of the second lower plastic member 20.

The second lower plastic member 20 further includes a third rib 241 and a fourth rib 242. The third rib 241 and the fourth rib 242 both protrude from the second bottom face 212 of the second main body 21. In the width direction of the second lower plastic member 20, the third rib 241 and the fourth rib 242 are respectively located on two opposite sides of the second main body 21. The third rib 241 and the fourth rib 242 both extend in a length direction of the second lower plastic member 20. The length of the third rib 241 and the length of the fourth rib 242 are equal to the length of the second lower plastic member 20 (certain process tolerances are allowed).

The second lower plastic member 20 further includes a second boss 25. The second boss 25 protrudes from the second bottom face 212 of the second main body 21. In the length direction of the second lower plastic member 20 (i.e., the *Y*-axis direction), the second boss 25 is located on an end of the second lower plastic member 20 away from the second recess 22. In a width direction of the second lower plastic member 20 (i.e., the *X*-axis direction), two opposite sides of the second boss 25 are opposite to and spaced apart from the third rib 241 and the fourth rib 242, respectively. A second flow channel *G* is defined between the second boss 25 and each of the third rib 241 and the fourth rib 242. The second flow channel *G* is configured to allow gas inside the energy-storage apparatus 1000 to pass through. In the embodiment, the second boss 25 is substantially a rectangular protrusion.

The second lower plastic member 20 further includes a second limiting protrusion 26. The second limiting protrusion 26 protrudes from the second bottom face 212 of the second main body 21. In the *Y*-axis direction, the second boss 25 and the second limiting protrusion 26 are disposed adjacent to each other. The second limiting protrusion 26 extends in the *X*-axis direction. The second limiting protrusion 26 is configured for contact with the electrode assembly 300. The second limiting protrusion 26 has a second protruding surface 261. In the *Z*-axis direction, the second protruding surface 261 faces away from the second bottom face 212. In the embodiment, the second limiting protrusion 26 is substantially a rectangular protrusion. The distance from the second protruding surface 261 to the second bottom face 212 is greater than or equal to 2mm and less than or equal to 4mm. That is, the height by which the second limiting protrusion 26 protrudes from the second bottom face 212 is greater than or equal to 2mm and less than or equal to 4mm. A second passage *N* is defined between each of two end surfaces of the second limiting protrusion 26 in a width direction of the second main body 21 and a corresponding one of the third rib 241 and the fourth rib 242. The second passage *N* is in communication with the second flow channel *G* and is configured to allow gas inside the energy-storage apparatus 1000 to pass through.

The second lower plastic member 20 further defines a second mounting recess 27. The second mounting recess 27 is recessed from a surface of the second boss 25 facing away from the second main body 21 and is recessed towards the second main body 21. The second mounting recess 27 is configured to accommodate a part of the second connector 70. The second mounting recess 27 has a second recess-bottom-wall 271, a second recess-side-wall 272, and a fourth recess-side-wall 273. The orientation of the second recess-bottom-wall 271 is the same as the orientation of the second protruding surface 261. The second recess-side-wall 272 is connected to the fourth recess-side-wall 273, and the second recess-side-wall 272 and the fourth recess-side-wall 273 both surround and are connected to the second recess-bottom-wall 271. It may be understood that, the second recess-side-wall 272 and the fourth recess-side-wall 273 together form a recess-peripheral-wall of the second mounting recess 27. The fourth recess-side-wall 273 is away from the second limiting protrusion 26 and is opposite to the second limiting protrusion 26. The second recess-side-wall 272 is close to the second limiting protrusion 26. In the embodiment, a surface of the second recess-side-wall 272 close to the second recess-bottom-wall 271 is a flat surface, and a surface of the fourth recess-side-wall 273 close to the second recess-bottom-wall 271 is an arc surface.

It may be understood that, a surface of the second boss 25 away from the second main body 21 may be regarded as the second bottom face 212. Alternatively, the second lower plastic member 20 does not include the second boss 25, and the second mounting recess 27 may be considered as being directly recessed from the second bottom face 212 and recessed towards the second top face 211.

The second lower plastic member 20 further includes a second extension section *b*. In the *Z*-axis direction, the second extension section *b* protrudes from an end surface of the second recess-side-wall 272 facing away from the second recess-bottom-wall 271, and the second extension section *b* extends away from the second lower plastic member 20. The second extension section *b* is spaced apart from and opposite to the second limiting protrusion 26 in a length direction of the second main body 21, and the second extension section *b* is located on an end portion of the second main body 21 in the length direction of the second main body 21. It may be understood that, in the *Y*-axis direction, the second extension section *b* is disposed on an edge of an end portion of the second lower plastic member 20 away from the first lower plastic member 10. The second extension section *b* is connected to the protective film 400 by a thermal melting process.

The second lower plastic member 20 further defines a second terminal-post through hole 28. The second terminal-post through hole 28 is configured to allow the second terminal post 50 to pass through. In the length direction of the second lower plastic member 20, the second terminal-post through hole 28 is spaced apart from the second recess 22. The second terminal-post through hole 28 penetrates through the second top face 211 of the second main body 21 and the second recess-bottom-wall 271 of the second mounting recess 27. In the embodiment, the second terminal-post through hole 28 is substantially a hexagonal hole. In some embodiments, the second terminal-post through hole 28 may be of a circular shape, an elliptical shape, or other shapes, which is not strictly limited in the disclosure.

The second lower plastic member 20 further includes multiple second positioning posts 29. The multiple second positioning posts 29 all protrude from the second recess-bottom-wall 271. The multiple second positioning posts 29 are spaced apart from the periphery of the second terminal-post through hole 28, and the multiple second positioning posts 29 are spaced apart from one another. The multiple second positioning posts 29 are configured to position the second connector 70 during assembly. In the embodiment, the multiple second positioning posts 29 are of cylindrical shapes. The number of the second positioning posts 29 is two. The two second positioning posts 29 are respectively located on two sides of a central axis C-C in the length direction of the second lower plastic member 20, and the line connecting the two second positioning posts 29 intersects with a central axis D-D in the width direction of the second lower plastic member 20. It may be understood that, the two second positioning posts 29 are symmetrically disposed in the length direction and the width direction of the second lower plastic member 20.

The second lower plastic member 20 further includes multiple second limiting posts 213. The multiple second limiting posts 213 protrude from the second top face 211 of the second main body 21. The multiple second limiting posts 213 are spaced apart from the periphery of the second terminal-post through hole 28, and the multiple second limiting posts 213 are spaced apart from one another. The multiple second limiting posts 213 are configured to position the end cover 30 during assembly. In the embodiment, the second limiting posts 213 are of cylindrical shapes. The number of the second limiting posts 213 is two. The line connecting the two second limiting posts 213 is perpendicular to the central axis C-C in the length direction of the second lower plastic member 20, and the line connecting the two second limiting posts 213 is parallel to the central axis D-D in the width direction of the second lower plastic member 20. It may be understood that, the two second limiting posts 213 are symmetrically disposed with respect to the length direction and the width direction of the second lower plastic member 20.

Reference is made to FIG. 3 and FIG. 9 together. FIG. 9 is a schematic structural view of an end cover of the end cover assembly in the energy-storage apparatus illustrated in FIG. 3, viewed from another direction.

In the embodiment, the end cover 30 is an elongated thin plate. The end cover 30 has an upper surface 31 and a lower surface 32. The upper surface 31 and the lower surface 32 are opposite to each other in a thickness direction of the end cover 30 (i.e., the *Z*-axis direction).

The end cover 30 defines a first through hole 33 and a second through hole 34. In the thickness direction of the end cover 30, the first through hole 33 penetrates through the upper surface 31 and the lower surface 32. The first through hole 33 is configured to allow the first terminal post 40 to pass through. The second through hole 34 penetrates through both the upper surface 31 and the lower surface 32. The second through hole 34 is configured to allow the second terminal post 50 to pass through. In a length direction of the end cover 30 (i.e., the *Y*-axis direction), the first through hole 33 and the second through hole 34 are respectively located on two opposite ends of the end cover 30. In the embodiment, the first through hole 33 and the second through hole 34 are both circular holes.

The end cover 30 further defines an assembly recess 35. The assembly recess 35 is recessed from the lower surface 32 of the end cover 30. In the thickness direction of the end cover 30, the assembly recess 35 is recessed from the lower surface 32 of the end cover 30 towards the upper surface 31. In the length direction of the end cover 30, the assembly recess 35 is located between the first through hole 33 and the second through hole 34 and is spaced apart from the first through hole 33 and the second through hole 34. The assembly recess 35 is configured to accommodate the first protruding portion 13 of the first lower plastic member 10 and the second protruding portion 23 of the second lower plastic member 20. The shape of the assembly recess 35 matches the shapes of the first protruding portion 13 and the second protruding portion 23. In the embodiment, the assembly recess 35 is an elongated recess.

The end cover 30 further defines an explosion-proof hole 36. In the thickness direction of the end cover 30, the explosion-proof hole 36 penetrates through the upper surface 31 of the end cover 30 and a recess-bottom-wall of the assembly recess 35. In the length direction of the end cover 30, the explosion-proof hole 36 is located between the first through hole 33 and the second through hole 34. The explosion-proof hole 36 is configured for mounting of the explosion-proof sheet 80. It may be understood that, the explosion-proof sheet 80 covers the explosion-proof hole 36 and is welded to the edge of the explosion-proof hole 36.

The end cover 30 further defines multiple first limiting recesses 37 and multiple second limiting recesses 38. The multiple first limiting recesses 37 are recessed from the lower surface 32. In the thickness direction of the end cover 30, the multiple first limiting recesses 37 are recessed from the lower surface 32 towards the upper surface 31. The multiple first limiting recesses 37 are spaced apart from the periphery of the first through hole 33, and the multiple first limiting recesses 37 are spaced apart from one another. The first limiting recesses 37 are configured to accommodate the first limiting post 113 of the first lower plastic member 10. In the embodiment, the shape of the first limiting recess 37 matches the shape of the first limiting post 113. The number of the first limiting recesses 37 is two. The two first limiting recesses 37 are respectively located on two opposite sides of a central axis E-E in the length direction of the end cover 30, and the line connecting the centers of the two first limiting recesses 37 is parallel to a central axis F-F in the width direction of the end cover 30. It may be understood that, the two first limiting recesses 37 are symmetrically disposed in the width direction and the length direction of the first lower plastic member 10.

The structure of the second limiting recess 38 is the same as the structure of the first limiting recess 37. The multiple second limiting recesses 38 are recessed into the lower surface 32 in the thickness direction of the end cover 30. The multiple second limiting recesses 38 are configured to accommodate the second limiting post 213 of the second lower plastic member 20. In the embodiment, the number of the second limiting recesses 38 is two. The two second limiting recesses 38 are respectively located on two opposite sides of the central axis E-E in the length direction of the end cover 30, and the line connecting the centers of the two second limiting recesses 38 is parallel to the central axis F-F in the width direction of the end cover 30. It may be understood that, the two second limiting recesses 38 are symmetrically disposed in the width direction and the length direction of the second lower plastic member 20.

In some embodiments, the end cover 30 is provided with a protective member (not shown in the figure) on the upper surface 31. The protective member completely covers the upper surface 31 of the end cover 30. The protective member is configured to protect the end cover 30 and prevent the end cover 30 from being scratched and affecting the use of the end cover 30.

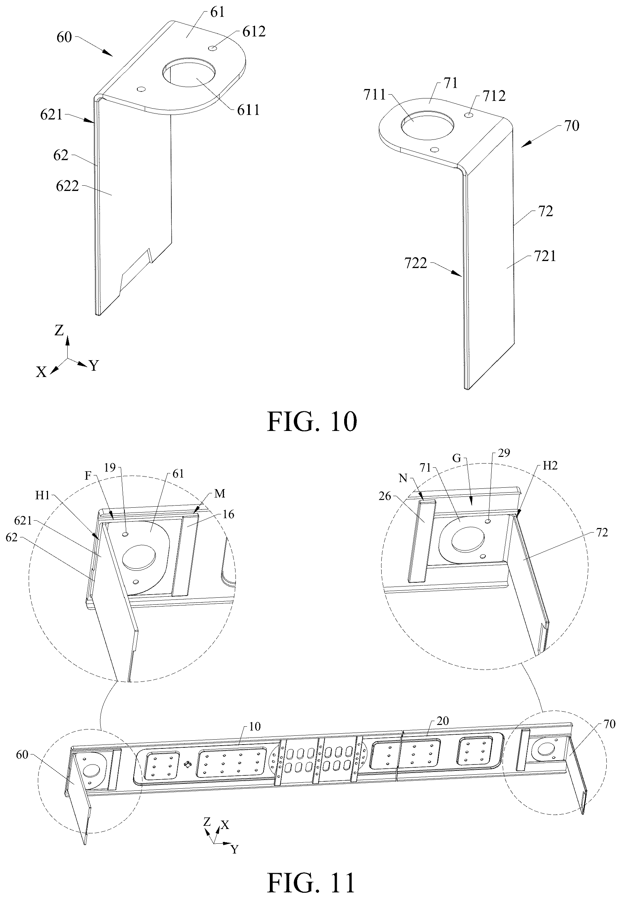

Reference is made to FIG. 10, which is a schematic structural view of a first connector and a second connector of the end cover assembly in the energy-storage apparatus illustrated in FIG. 3. It may be noted that, in the embodiment, the first connector 60 and the second connector 70 are both metal sheets.

The first connector 60 includes a first connection portion 61 and a first transition portion 62. The first connection portion 61 and the first transition portion 62 are connected at an angle, forming an L-shaped structure. The first connection portion 61 is accommodated in the first mounting recess 17 of the first lower plastic member 10. The first connection portion 61 is configured to fix and is electrically connected to the first terminal post 40. The first transition portion 62 is electrically connected to the first tab 320 of the electrode assembly 300. It may be understood that, the first connector 60 is configured to transfer the current from the electrode assembly 300 to the first terminal post 40 sequentially through the first transition portion 62 and the first connection portion 61.

Specifically, the first connection portion 61 defines a first penetrating hole 611. The first penetrating hole 611 penetrates through two surfaces of the first connection portion 61 in a thickness direction of the first connection portion 61 (i.e., the *Z*-axis direction). The first penetrating hole 611 is configured to allow the first terminal post 40 to pass through. A hole wall of the first penetrating hole 611 is connected to the first terminal post 40. In the embodiment, the shape of the first connection portion 61 matches the shape of the first mounting recess 17. The first penetrating hole 611 is a circular hole.

The first connection portion 61 further defines multiple first limiting holes 612. The multiple first limiting holes 612 all penetrate through the two surfaces of the first connection portion 61 in the thickness direction of the first connection portion 61. The multiple first limiting holes 612 are spaced apart from the periphery of the first penetrating hole 611, and the multiple first limiting holes 612 are spaced apart from one another. Each first limiting hole 612 is configured to allow one corresponding first positioning post 19 of the first lower plastic member 10 to pass through. In the embodiment, the shape and the number of the first limiting holes 612 match the shape and the number of the first positioning posts 19, respectively. The multiple first limiting holes 612 are circular holes. The number of the first limiting holes 612 is two. The two first limiting holes 612 are respectively located on two opposite sides of a central axis in a length direction of the first connection portion 61 (i.e., the *Y*-axis direction). The line connecting the centers of the two first limiting holes 612 intersects with the *X*-axis.

In the embodiment, the first transition portion 62 is a rectangular thin plate. The first transition portion 62 has a first outer-side-surface 621 and a first inner-side-surface 622. The first outer-side-surface 621 and the first inner-side-surface 622 are opposite to each other in a thickness direction of the first transition portion 62 (i.e., the *Y*-axis direction). The first outer-side-surface 621 faces away from the first connection portion 61 and is connected to the first tab 320.

The structure of the second connector 70 is similar to the structure of the first connector 60. The second connector 70 includes a second connection portion 71 and a second transition portion 72. The second connection portion 71 and the second transition portion 72 are connected at an angle, forming an L-shaped structure. The second connection portion 71 is accommodated in the second mounting recess 27 of the second lower plastic member 20. The second connection portion 71 is configured to fix and is electrically connected to the second terminal post 50. The second transition portion 72 is electrically connected to the second tab 330 of the electrode assembly 300. It may be understood that, the second connector 70 is configured to transfer the current from the electrode assembly 300 to the second terminal post 50 sequentially through the second transition portion 72 and the second connection portion 71.

Specifically, the second connection portion 71 defines a second penetrating hole 711. The second penetrating hole 711 penetrates through two surfaces of the second connection portion 71 in a thickness direction of the second connection portion 71 (i.e., the *Z*-axis direction). The second penetrating hole 711 is configured to allow the second terminal post 50 to pass through. A hole wall of the second penetrating hole 711 is connected to the second terminal post 50. In the embodiment, the shape of the second connection portion 71 matches the shape of the second mounting recess 27. The second penetrating hole 711 is a circular hole.

The second connection portion 71 further defines multiple second limiting holes 712. The multiple second limiting holes 712 all penetrate through the two surfaces of the second connection portion 71 in the thickness direction of the second connection portion 71. The multiple second limiting holes 712 are spaced apart from the periphery of the second penetrating hole 711, and the multiple second limiting holes 712 are spaced apart from one another. Each second limiting hole 712 is configured to allow one corresponding second positioning post 29 of the second lower plastic member 20 to pass through. In the embodiment, the shape and the number of the second limiting holes 712 match the shape and the number of the second positioning posts 29, respectively. The multiple second limiting holes 712 are circular holes. The number of the second limiting holes 712 is two. The two second limiting holes 712 are respectively located on two opposite sides of a central axis in a length direction of the second connection portion 71 (i.e., the *Y*-axis direction). The line connecting the centers of the two second limiting holes 712 intersects with the *X*-axis.

In the embodiment, the second transition portion 72 is a rectangular thin plate. The second transition portion 72 has a second outer-side-surface 721 and a second inner-side-surface 722. The second outer-side-surface 721 and the second inner-side-surface 722 are opposite to each other in a thickness direction of the second transition portion 72 (i.e., the *Y*-axis direction). The second outer-side-surface 721 faces away from the second connection portion 71 and is connected to the second tab 330.

Reference is made to FIG. 11, which is a schematic structural view of part of the energy-storage apparatus illustrated in FIG. 3. It may be noted that, FIG. 11 only schematically illustrates the structure of assembly of the lower plastic member with the first connector 60 and the second connector 70, and does not refer to the assembly sequence.

In the embodiment, the first connector 60 is mounted on the first lower plastic member 10. The first connection portion 61 of the first connector 60 is accommodated in the first mounting recess 17 of the first lower plastic member 10 and abuts against the first recess-bottom-wall 171 and the third recess-side-wall 173 of the first mounting recess 17. The two first positioning posts 19 of the first lower plastic member 10 respectively extend through the two first limiting holes 612 of the first connection portion 61, to limit and fix the first connector 60 to the first lower plastic member 10. The first transition portion 62 extends away from the first lower plastic member 10. The first outer-side-surface 621 of the first transition portion 62 is opposite to and spaced apart from the first recess-side-wall 172 of the first mounting recess 17, defining a first gap *H*1 therebetween. The function of the first gap *H*1 is to reserve sufficient space for welding the first connector 60 and the first tab 320, and to accommodate pre-welding between the first tab 320 with different thickness and the first connection portion 62. In the embodiment, the width of the first gap *H*1 (i.e., the dimension of the first gap *H*1 in the *Y*-axis direction) is greater than or equal to 0.8mm and less than or equal to 3mm.

The second connector 70 is mounted on the second lower plastic member 20. The second connection portion 71 of the second connector 70 is accommodated in the second mounting recess 27 of the second lower plastic member 20 and abuts against the second recess-bottom-wall 271 and the fourth recess-side-wall 273 of the second mounting recess 27. The two second positioning posts 29 of the second lower plastic member 20 respectively extend through the two second limiting holes 712 of the second connection portion 71, to limit and fix the second connector 70 to the second lower plastic member 20. The second transition portion 72 extends away from the second lower plastic member 20. The second outer-side-surface 721 of the second transition portion 72 is opposite to and spaced apart from the second recess-side-wall 272 of the second mounting recess 27, defining a second gap *H*2. The function of the second gap *H*2 is to reserve sufficient space for welding the second connector 70 and the second tab 330, and to accommodate pre-welding between the second tab 330 with different thickness and the second transition portion 72. In the embodiment, the width of the second gap *H*2 (i.e., the dimension of the second gap *H*2 in the *Y*-axis direction) is greater than or equal to 0.2mm and less than or equal to 2.5mm (certain process tolerances are allowed).

It may be noted that, the line connecting the two first positioning posts 19 of the first lower plastic member 10 intersects with the central axis B-B in the width direction of the first lower plastic member 10, and the line connecting the two second positioning posts 29 of the second lower plastic member 20 is parallel to the central axis D-D in the width direction of the second lower plastic member 20. Therefore, when the first connector 60 and the second connector 70 are mounted on the lower plastic member, the first connector 60 will not be mistakenly mounted on the second lower plastic member 20, and the second connector 70 will not be mistakenly mounted on the first lower plastic member 10, thereby providing a mistake-proofing effect during the assembly of the first connector 60 and the second connector 70.

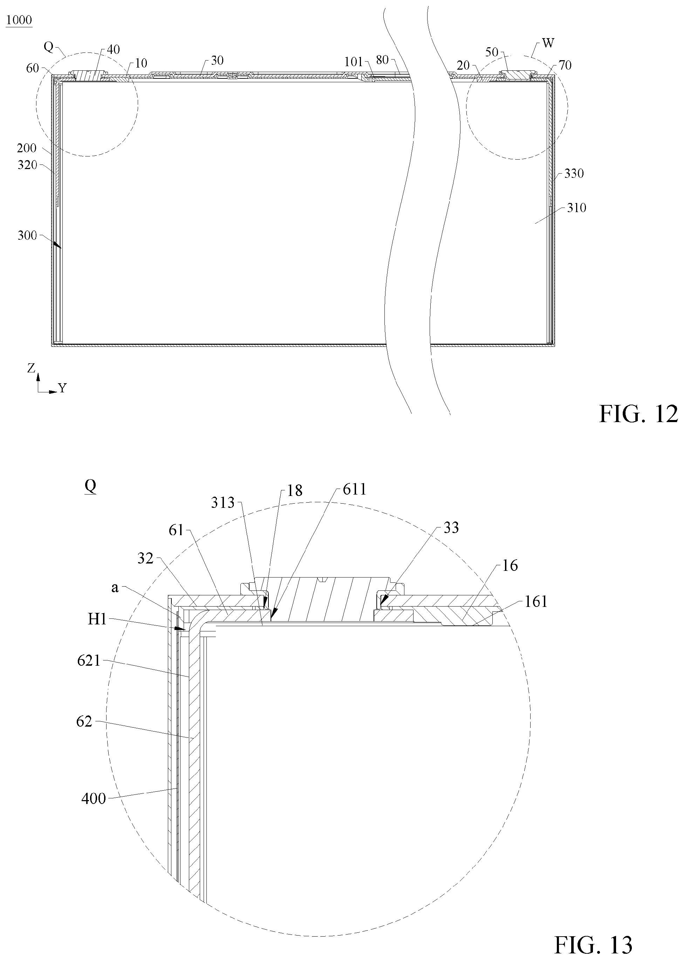

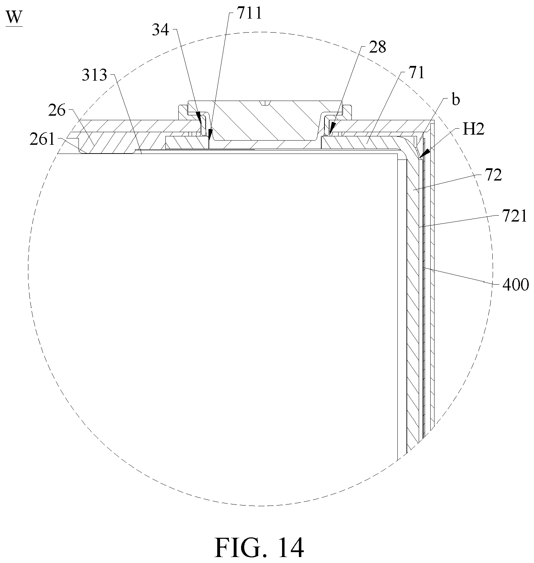

Reference is made to FIG. 12, FIG. 13, and FIG. 14 together. FIG. 12 is a schematic cross-sectional structural view of part of the energy-storage apparatus illustrated in FIG. 2, FIG. 13 is an enlarged view of section *Q* of the energy-storage apparatus illustrated in FIG. 12, and FIG. 14 is an enlarged view of section *W* of the energy-storage apparatus illustrated in FIG. 12.

In the embodiment, the first terminal post 40, the second terminal post 50, the first connector 60, the second connector 70, the first lower plastic member 10, and the second lower plastic member 20 are mounted on the end cover 30 to form the end cover assembly 100.

Specifically, in the *Y*-axis direction, the first lower plastic member 10 is located on an end of the second lower plastic member 20 away from the second boss 25. An end of the first lower plastic member 10 away from the first boss 15 is connected to the end of the second lower plastic member 20 away from the second boss 25. The first top face 111 of the first lower plastic member 10 and the second top face 211 of the second lower plastic member 20 face the same direction and are both connected to the lower surface 32 of the end cover 30. The first protruding portion 13 of the first lower plastic member 10 and the second protruding portion 23 of the second lower plastic member 20 are both accommodated in the assembly recess 35 of the end cover 30. The first face 131 of the first protruding portion 13 and the second face 231 of the second protruding portion 23 both abut against the recess-bottom-wall of the assembly recess 35, so that the first lower plastic member 10 and the second lower plastic member 20 are limited and fixed to the end cover 30, preventing displacement of the first lower plastic member 10 and the second lower plastic member 20 relative to the end cover 30, and thus preventing impact on the reliability of the energy-storage apparatus 1000. In the *Z*-axis direction, the explosion-proof grid 101 of the first lower plastic member 10 is opposite to and spaced apart from the explosion-proof sheet 80, together forming the explosion-proof valve of the end cover assembly 100. The orthographic projection of the explosion-proof sheet 80 on the first lower plastic member 10 completely covers the multiple vent holes 102 of the explosion-proof grid 101, allowing gas to quickly flow to the explosion-proof sheet 80 through the multiple vent holes 102. The first terminal-post through hole 18 of the first lower plastic member 10 is disposed coaxially with the first through hole 33 of the end cover 30. That is, the first penetrating hole 611 of the first connector 60 is disposed coaxially with the first through hole 33. The first terminal post 40 extends through the first through hole 33, the first terminal-post through hole 18, and the first penetrating hole 611 in sequence. A peripheral side of the first terminal post 40 abuts against the hole wall of the first penetrating hole 611. The first terminal post 40 is fixed to the first connection portion 61 by means of laser welding, so that the first terminal post 40 is electrically connected to the first connector 60. The first terminal post 40 is sealed and insulated from the end cover 30 via an insulating member (not illustrated in the figure), which not only avoids short circuits between the first terminal post 40 and the end cover 30, but also prevents electrolyte inside the energy-storage apparatus 1000 from leaking out.

The second terminal-post through hole 28 of the second lower plastic member 20 is disposed coaxially with the second through hole 34 of the end cover 30. That is, the second penetrating hole 711 of the second connector 70 is disposed coaxially with the second through hole 34. The second terminal post 50 extends through the second through hole 34, the second terminal-post through hole 28, and the second penetrating hole 711 in sequence. A peripheral side of the second terminal post 50 abuts against the hole wall of the second penetrating hole 711. The second terminal post 50 is fixed to the second connection portion 71 by means of laser welding, so that the second terminal post 50 is electrically connected to the second connector 70. The second terminal post 50 is sealed and insulated from the end cover 30 via an insulating member (not illustrated in the figure), which not only avoids short circuits between the second terminal post 50 and the end cover 30, but also prevents electrolyte inside the energy-storage apparatus 1000 from leaking out.

It may be noted that, the length of the first lower plastic member 10 is greater than the length of the second lower plastic member 20. The width of the first lower plastic member 10 is equal to the width of the second lower plastic member 20. The sum of the length of the first lower plastic member 10 and the length of the second lower plastic member 20 is equal to the length of the lower plastic member. The first main body 11 of the first lower plastic member 10 and the second main body 21 of the second lower plastic member 20 are connected to form a main body of the lower plastic member. The first top face 111 of the first lower plastic member 10 and the second top face 211 of the second lower plastic member 20 form a top face of the lower plastic member. The first bottom face 112 of the first lower plastic member 10 and the second bottom face 212 of the second lower plastic member 20 form a bottom face of the lower plastic member. The first rib 141 of the first lower plastic member 10 is connected to the third rib 241 of the second lower plastic member 20, and the second rib 142 of the first lower plastic member 10 is connected to the fourth rib 242 of the second lower plastic member 20, thereby forming two ribs of the lower plastic member in the width direction of the lower plastic member, respectively. The length of each of the two ribs is equal to the length of the lower plastic member. The first protruding portion 13 of the first lower plastic member 10 and the second protruding portion 23 of the second lower plastic member 20 are connected and spliced to form a protruding portion. The first recess 12 of the first lower plastic member 10 and the second recess 22 of the second lower plastic member 20 are connected and spliced to form a recess. The depth of the second recess 22 is equal to the depth of the first recess 12 (certain process tolerances are allowed).

The end cover assembly 100 is assembled with the electrode assembly 300. The first protruding surface 161 of the first limiting protrusion 16 and the second protruding surface 261 of the second limiting protrusion 26 both abut against the top surface 313 of the electrode-assembly body 310, avoiding misalignment or displacement of the multiple positive electrode sheets and negative electrode sheets constituting the electrode assembly 300, thereby fixing and limiting the position of the entire electrode assembly 300. The first extension section *a* of the first lower plastic member 10 and the second extension section b of the second lower plastic member 20 extend towards the electrode assembly 300.

The first connector 60 and the second connector 70 are connected to the electrode assembly 300. In the *Z*-axis direction, the first connection portion 61 of the first connector 60 and the second connection portion 71 of the second connector 70 are both spaced apart from the electrode-assembly body 310 to prevent the first connection portion 61 and the second connection portion 71 from being connected to the electrode-assembly body 310, and thus avoiding short circuits. The first transition portion 62 of the first connector 60 is connected to the first tab 320. The first inner-side-surface 622 of the first transition portion 62 faces the first side surface 311 of the electrode-assembly body 310. The first tab 320 extends from the first side surface 311 of the electrode-assembly body 310 to a side of the first transition portion 62 facing away from the electrode-assembly body 310 and is welded to the first outer-side-surface 621 of the first transition portion 62, so that the first tab 320 is electrically connected to the first connector 60.

The second transition portion 72 of the second connector 70 is connected to the second tab 330. The second inner-side-surface 722 of the second transition portion 72 faces the second side surface 312 of the electrode-assembly body 310. The second tab 330 extends from the second side surface 312 of the electrode-assembly body 310 to a side of the second transition portion 72 facing away from the electrode-assembly body 310 and is welded to the second outer-side-surface 721 of the second transition portion 72, so that the second tab 330 is electrically connected to the second connector 70.

It may be noted that, the length of the first transition portion 62 is less than the length of the first tab 320. The length of the second transition portion 72 is less than the length of the second tab 330.

As illustrated in FIG. 3 and FIG. 4, the peripheral side and the bottom of the electrode assembly 300 are wrapped by the protective film 400. Specifically, the first side surface 311 and the second side surface 312 of the electrode-assembly body 310, the two surfaces of the electrode-assembly body 310 in a width direction of the electrode-assembly body 310, the bottom surface 314, the first tab 320, the second tab 330, the first transition portion 62, and the second transition portion 72 are all covered by the protective film 400. It may be understood that, the protective film 400 forms a cylindrical structure and defines an assembly opening 401. The protective film 400 at the edge of the assembly opening 401 is connected to the edge of the lower plastic member. Specifically, the protective film 400 at the edge of the assembly opening 401 is connected to the first recess-side-wall 172, the first rib 141, the second rib 142, the third rib 241, the fourth rib 242, and the second recess-side-wall 272, and is connected to the first extension section *a* on the first recess-side-wall 172, the first rib 141, the second rib 142, the second extension section *b* on the second recess-side-wall 272, the third rib 241, and the fourth rib 242 by a thermal melting process, thereby achieving the fixation of the protective film 400 to the lower plastic member. The electrode assembly 300 wrapped with the protective film 400 is accommodated in the accommodating cavity 202 of the housing 200. The protective film 400 insulates the electrode assembly 300 from the housing 200, preventing short circuits between the electrode assembly 300 and the housing 200. The edge of the end cover 30 is connected to the edge of the opening 201 of the housing 200 by welding or other means to seal the energy-storage apparatus 1000.

It may be noted that, under thermal runaway of the energy-storage apparatus 1000, a large amount of gas is generated inside the energy-storage apparatus 1000. Gas flows from two sides of the electrode assembly 300 in a width direction of the electrode assembly 300 through the first flow channel *F* and the first passage *M* of the first lower plastic member 10 and the second flow channel *G* and the second passage *N* of the second lower plastic member 20, flows through the vent holes 102 of the explosion-proof grid 101 towards the explosion-proof hole 36, and breaks through the explosion-proof sheet 80 to be discharged from the energy-storage apparatus 1000. In this way, the circulation of gas inside the energy-storage apparatus 1000 can be accelerated, preventing gas from accumulating inside the energy-storage apparatus 1000 and ensuring its timely discharge, thereby improving the safety and reliability of the energy-storage apparatus 1000.

In related art, electrode assemblies are typically of laminated structures or wound structures. In the case where an electrode assembly is of a laminated structure, a positive tab and a negative tab of the electrode assembly typically extend from the same side or respectively extend from two opposite sides of the laminated electrode assembly, and a positive connector and a negative connector of an end cover assembly need to be welded to the positive tab and the negative tab respectively. However, in the existing end cover assemblies, the structure of lower plastic members is not convenient for installation with the positive connector and the negative connector.

In embodiments of the disclosure, the first lower plastic member 10 includes the first boss 15. The first boss 15 defines the first mounting recess 17, and the first mounting recess 17 cooperates with the first connector 60. The first recess-side-wall 172 of the first mounting recess 17 and the first transition portion 62 of the first connector 60 define the first gap *H*1, reserving space for the assembly of the first connector 60 and the first tab 320. Similarly, the second lower plastic member 20 includes the second boss 25. The second boss 25 defines the second mounting recess 27, and the second mounting recess 27 cooperates with the second connector 70. The second recess-side-wall 272 of the second mounting recess 27 and the second transition portion 72 of the second connector 70 define the second gap *H*2, reserving space for the assembly of the second connector 70 and the second tab 330.

The line connecting the two first positioning posts 19 of the first lower plastic member 10 intersects the central axis B-B in the width direction of the first lower plastic member 10, and the line connecting the two second positioning posts 29 of the second lower plastic member 20 is parallel to the central axis D-D in the width direction of the second lower plastic member 20. This not only provides a positioning reference for the first connector 60 and the second connector 70, but also provides a mistake-proofing effect during the assembly of the first connector 60 and the second connector 70, facilitating the assembly of the first connector 60 and the second connector 70 with the lower plastic member.

The foregoing illustrations are merely some embodiments and implementations of the disclosure, and are not intended to limit the protection scope of the disclosure. Any variations or replacements readily figured out by a person skilled in the art within the technical scope disclosed in the disclosure shall fall within the protection scope of the disclosure. Therefore, the protection scope of the disclosure shall be subject to the protection scope of the claims.

## Claims

1. An energy-storage apparatus (1000), comprising:
a housing (200) having an opening (201);
an electrode assembly (300), wherein the electrode assembly (300) comprises an electrode-assembly body (310) and a tab, the electrode-assembly body (310) has a side surface and a top surface (313) connected to the side surface, and the tab extends from the side surface and is connected to the electrode-assembly body (310); and
an end cover assembly (100), wherein the end cover assembly (100) comprises a lower plastic member and a terminal post, the lower plastic member comprises a main body and a limiting protrusion, the main body has a top face and a bottom face, and the top face and the bottom face are disposed opposite to each other in a thickness direction of the main body; the lower plastic member further defines a mounting recess, wherein the mounting recess is recessed from the bottom face and located on an end portion of the lower plastic member in a length direction of the lower plastic member, and the limiting protrusion is disposed adjacent to the mounting recess in the length direction of the lower plastic member; the end cover assembly (100) further comprises a connector, wherein the connector comprises a connection portion and a transition portion, the transition portion is connected to the connection portion at an angle, the connection portion is accommodated in the mounting recess, and the transition portion extends away from the bottom face;
wherein the electrode assembly (300) is mounted in the housing (200), the end cover assembly (100) seals the opening (201), the limiting protrusion abuts against the top surface (313) of the electrode assembly (300) facing the opening (201), the transition portion is stacked on the side surface and is stacked on and connected to the tab, the terminal post extends through the main body and the connection portion, and the terminal post is electrically connected with the connection portion, wherein the connection portion is spaced apart from the top surface (313) of the electrode assembly (300).

2. The energy-storage apparatus (1000) of claim 1, wherein the lower plastic member further comprises two ribs, the two ribs both protrude from the bottom face, and the two ribs are respectively located on opposite edges of the bottom face in a width direction of the bottom face;
the energy-storage apparatus (1000) further comprises a protective film (400), wherein the protective film (400) is located between the housing (200) and the electrode assembly (300) and wraps a bottom portion and a peripheral side of the electrode assembly (300), the protective film (400) defines an assembly opening (401), the top surface (313) is located at the assembly opening (401), and the assembly opening (401) faces the bottom face; and
a passage is defined between each of two end surfaces of the limiting protrusion in a width direction of the lower plastic member and a corresponding one of the two ribs.

3. The energy-storage apparatus (1000) of claim 1 or 2, wherein a height of the limiting protrusion protruding from the bottom face is greater than or equal to 2mm and less than or equal to 4mm.

4. The energy-storage apparatus (1000) of any one of claims 1 to 3, wherein the mounting recess has a recess-bottom-wall and a recess-side-wall connected to the recess-bottom-wall;
in the length direction of the lower plastic member, a gap is defined between a surface of the transition portion facing away from the connection portion and a part of the recess-side-wall of the mounting recess opposite to the limiting protrusion.

5. The energy-storage apparatus (1000) of claim 4, wherein a width of the gap is greater than or equal to 0.2mm and less than or equal to 3mm.

6. The energy-storage apparatus (1000) of claim 4 or 5, wherein the lower plastic member further comprises an extension section, the extension section protrudes from an end surface of the recess-side-wall facing away from the recess-bottom-wall, the extension section is spaced apart from and opposite to the limiting protrusion in a length direction of the main body, and the extension section is located on an end portion of the main body in the length direction of the main body; and
the protective film (400) at a peripheral edge of the assembly opening (401) is integrally connected to the extension section.

7. The energy-storage apparatus (1000) of any one of claims 4 to 6, wherein the lower plastic member further comprises two positioning posts, the two positioning posts protrude from the recess-bottom-wall, and the two positioning posts are staggered in the length direction and the width direction of the lower plastic member; and
the connection portion defines two limiting holes, the two limiting holes penetrate through two surfaces of the connection portion in a thickness direction of the connection portion, and each of the two positioning posts extends through a corresponding one of the two limiting holes.

8. The energy-storage apparatus (1000) of any one of claims 1 to 7, wherein the lower plastic member further defines a recess, wherein in a thickness direction of the lower plastic member, the recess is recessed from the bottom face towards the top face, and a protruding portion protrudes from the top face.

9. The energy-storage apparatus (1000) of claim 8, wherein the lower plastic member further comprises a terminal-post through hole configured to allow the terminal post to pass through, wherein in the length direction of the lower plastic member, the terminal-post through hole is spaced apart from the recess, and penetrates through the top face of the main body and the recess-bottom-wall of the mounting recess.

10. The energy-storage apparatus (1000) of claim 9, wherein the lower plastic member further comprises two limiting posts protruding from the top face of the main body, wherein the two limiting posts are spaced apart from a periphery of the terminal-post through hole, and are spaced apart from each other.

11. The energy-storage apparatus (1000) of claim 1 or 2, wherein the end cover assembly (100) further comprises an end cover (30), the end cover (30) and the lower plastic member are stacked in a thickness direction of the end cover assembly (100), and the end cover (30) is located on a side of the lower plastic member facing away from the electrode assembly (300);
the lower plastic member further comprises a boss, the boss protrudes from the bottom face, the mounting recess is recessed from the boss, the boss is spaced apart from each of the two ribs to define a flow channel in the width direction of the lower plastic member, and the flow channel is in communication with the passage; and
the lower plastic member further comprises an explosion-proof grid (101), the explosion-proof grid (101) defines a plurality of vent holes (102), the plurality of vent holes (102) penetrate through the top face and the bottom face, and the plurality of vent holes (102) are in communication with the flow channel.

12. The energy-storage apparatus (1000) of claim 11, wherein the end cover (30) has an upper surface (31) and a lower surface (32) that are opposite to each other in a thickness direction of the end cover (30).

13. The energy-storage apparatus (1000) of claim 4, wherein the side surface comprises a first side surface (311) and a second side surface (312), the first side surface (311) and the second side surface (312) are disposed opposite to each other in a width direction of the electrode-assembly body (310), the tab comprises a first tab (320) and a second tab (330), the first tab (320) extends from the first side surface (311), and the second tab (330) extends from the second side surface (312);
the connector comprises a first connector (60) and a second connector (70), the first connector (60) comprises a first connection portion (61) and a first transition portion (62), the first transition portion (62) has a first outer-side-surface (621), the second connector (70) comprises a second connection portion (71) and a second transition portion (72), the second transition portion (72) has a second outer-side-surface (721), the first outer-side-surface (621) and the second outer-side-surface (721) both face away from the electrode-assembly body (310), the first outer-side-surface (621) is connected to the first tab (320), and the second outer-side-surface (721) is connected to the second tab (330);
the mounting recess comprises a first mounting recess (17) and a second mounting recess (27), the first connection portion (61) is accommodated in the first mounting recess (17), the first mounting recess (17) has a first recess-side-wall (172), a first gap (*H*1) is defined between the first outer-side-surface (621) and the first recess-side-wall (172), the second mounting recess (27) has a second recess-side-wall (272), and a second gap (H2) is defined between the second outer-side-surface (721) and the second recess-side-wall (272); and
a width of the first gap (*H*1) is greater than or equal to 0.8mm and less than or equal to 3mm, and a width of the second gap (*H*2) is greater than or equal to 0.2mm and less than or equal to 2.5mm.

14. The energy-storage apparatus (1000) of claim 13, wherein the first mounting recess (17) further has a first recess-bottom-wall (171), and the second mounting recess (27) further has a second recess-bottom-wall (271);
the lower plastic member further comprises two first positioning posts (19) and two second positioning posts (29), the two first positioning posts (19) both protrude from the first recess-bottom-wall (171) and are staggered in the length direction and the width direction of the lower plastic member, the two second positioning posts (29) both protrude from the second recess-bottom-wall (271) and are symmetrically disposed in the length direction and the width direction of the lower plastic member; and
the first connection portion (61) defines two first limiting holes (612), the two first limiting holes (612) both penetrate through two surfaces of the first connection portion (61) in a thickness direction of the first connection portion (61), and each of the two first positioning posts (19) extends through a corresponding one of the two first limiting holes (612); the second connection portion (71) defines two second limiting holes (712), the two second limiting holes (712) both penetrate through two surfaces of the second connection portion (71) in a thickness direction of the second connection portion (71), and each of the two second positioning posts (29) extends through a corresponding one of the two second limiting holes (712).

15. An electricity-consumption device, comprising the energy-storage apparatus (1000) of any one of claims 1 to 14, wherein the energy-storage apparatus (1000) is configured to supply power to the electricity-consumption device.
